# EUROPEAN PATENT APPLICATION

(11) **EP 4 546 445 A1**
(43) Date of publication of application: **30.04.2025**
(21) Application number: 24180014.3
(22) Date of filing: 04.06.2024
(51) Int. Cl.: H01M 4/133, H01M 4/134, H01M 4/36, H01M 4/38, H01M 4/583, H01M 4/587, H01M 10/0525, H01M 4/02

(54) **NEGATIVE ELECTRODE FOR RECHARGEABLE LITHIUM BATTERY AND RECHARGEABLE LITHIUM BATTERY INCLUDING SAME**

(30) Priority: 26.10.2023 KR 20230144991
(71) Applicant: Samsung SDI Co., Ltd., Yongin-si, Gyeonggi-do 17084 (KR)
(72) Inventor: KWON, Hyejin, 17084 Yongin-si, Gyeonggi-do (KR); SHIN, Donghyun, 17084 Yongin-si, Gyeonggi-do (KR); KIM, Jaehong, 17084 Yongin-si, Gyeonggi-do (KR); CHA, Jungwook, 17084 Yongin-si, Gyeonggi-do (KR); CHO, Youngyeol, 17084 Yongin-si, Gyeonggi-do (KR); JEON, Seongho, 17084 Yongin-si, Gyeonggi-do (KR)
(74) Representative: Michalski Hüttermann & Partner Patentanwälte mbB

(57) **Abstract**

Disclosed are a negative electrode for a rechargeable lithium battery and a rechargeable lithium battery including the same. The negative electrode includes a current collector, a first negative active material layer on a first side of the current collector; and a second negative active material layer on a second side of the current collector, wherein a loading level (A) of the first negative active material layer is larger than a loading level(B) of the second negative active material layer, the first negative active material layer includes a 1a layer contacting the current collector and a 1b layer on one side of the 1a layer, the 1a layer includes a 1a negative active material, the 1b layer includes a 1b negative active material, the 1a negative active material includes natural graphite, or a mixture of natural graphite and artificial graphite, the 1b negative active material includes artificial graphite, and the second negative active material layer is a single layer.

## Description

### BACKGROUND

### 1. Field

Embodiments of this disclosure relate to a negative electrode for a rechargeable lithium battery and a rechargeable lithium battery including the same.

### 2. Description of the Related Art

Batteries used as a power source for electric vehicles have high capacity characteristics, high output, and fast charging performance to cover a long driving distance on a single charge.

A rechargeable lithium battery has been mainly used as such a battery.

Investigation into forming active material layers both on a current collector having a different thickness in order to provide high-capacity and a fast charge performance has been conducted.

### SUMMARY

One or more embodiments of the present disclosure provide a negative electrode for a rechargeable lithium battery exhibiting high-capacity and excellent fast charge performance.

Another embodiment provides a rechargeable lithium battery including the negative electrode.

One or more embodiments provide a negative electrode for a rechargeable lithium battery including a current collector; a first negative active material layer on a first side of the current collector; and a second negative active material layer on a second side of the current collector, wherein a loading level (A) of the first negative active material layer is larger than a loading level(B) of the second negative active material layer, the first negative active material layer provides a 1a layer contacting the current collector and a 1b layer on one side of the 1a layer, the 1a layer includes a 1a negative active material, the 1b layer includes a 1b negative active material, the 1a negative active material includes natural graphite, or a mixture of natural graphite and artificial graphite, the 1b negative active material is artificial graphite, and the second negative active material layer is a single layer.

Another embodiment provides a rechargeable lithium battery including the negative electrode; a positive electrode, and a non-aqueous electrolyte.

Other embodiments are included in the following detailed description.

A negative electrode for a rechargeable lithium battery according to embodiments of the present disclosure may exhibit excellent fast charge performances and high capacity.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a schematic cross-sectional view showing the negative electrode for the rechargeable lithium battery according to one or more embodiments.
FIG. 2 is a schematic perspective view showing the rechargeable lithium battery according to one or more embodiments.
FIG. 3 is a graph showing high-rate charge characteristics of the cells including the negative electrodes according to Examples 1 to 8 and Comparative Examples 1 to 3.
FIG. 4 is a graph showing high-rate cycle-life characteristics of the cells including the negative electrodes according to Examples 3 and 8, and Comparative Example 1.

### DETAILED DESCRIPTION

Hereinafter, embodiments of the present disclosure are described in more detail. However, these embodiments are examples, the present disclosure is not limited thereto and the present disclosure is defined by the scope of the appended claims, and equivalents thereof.

Terms used in the specification are used to explain embodiments, but are not intended limit the present disclosure. Expressions in the singular include expressions in the plural unless the context clearly dictates otherwise.

The term "combination thereof" may include a mixture, a laminate, a complex, a copolymer, an alloy, a blend, and/or a reaction product of reactants.

The term "comprise", "include" or "have" are intended to designate that the performed characteristics, numbers, step, constituted elements, or a combination thereof are present, but it should be understood that the possibility of presence or addition of one or more other characteristics, numbers, steps, constituted element, or a combination are not to be precluded in advance.

In the specification, unless explicitly described to the contrary, the word "comprise" and variations such as "comprises" or "comprising" will be understood to imply the inclusion of stated elements but not the exclusion of any other element.

The terms "about" and "substantially" used throughout the present specification refer to the meaning of the mentioned feature with inherent preparation and material permissible errors when presented, and are used in the sense of being close to or near that value. They are used to help understand the subject matter of the present disclosure.

In the specification, "A and/or B" indicates A or B or both of them.

The drawings may show that the thickness may be enlarged in order to clearly show the various layers and regions, and the same reference numerals are given to similar parts throughout the specification. When an element, such as a layer, a film, a region, a plate, and the like is referred to as being "on" or "over" another part, it may include cases where it is "directly on" another element, but also cases where there is another element in between. In contrast, when an element is referred to as being "directly on" another element, there are no intervening elements present.

The term "thickness" may be measured through a photograph or image taken with an optical microscope or a scanning electron microscope, for example.

Unless otherwise defined in the specification, the term particle diameter may refer to an average particle diameter. An average particle diameter indicates an average particle diameter (D50) where a cumulative volume is about 50 volume% in a particle size distribution. In case of a spherical shape, the term diameter may refer to a particle diameter or an average particle diameter, or in the case of a non-spherical shape, the term diameter may refer to a length of a longer axis or an average length of a longer axis. The average particle diameter (D50) may be measured by any suitable method generally used in the art, for example, by a particle size analyzer, and/or by a transmission electron microscopic image, a scanning electron microscopic, and/or field emission scanning electron microscopy (FE-SEM). In some embodiments, a dynamic light-scattering measurement device is used to perform a data analysis, and the number of particles is counted for each particle size range, and from this, the average particle diameter (D50) value may be easily obtained through a calculation. Laser diffraction may be obtained by distributing particles to be measured in a distribution solvent and introducing it to a commercially available laser diffraction particle measuring device (e.g., MT 3000 available from Microtrac, Ltd.), irradiating ultrasonic waves of about 28 kHz at a power of 60 W, and calculating an average particle diameter (D50) in the 50 % standard of particle distribution in the measuring device.

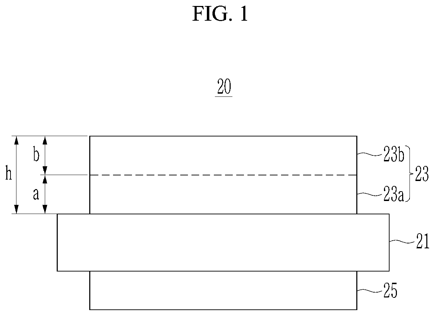

A negative electrode for a rechargeable lithium battery according to one or more embodiments includes a current collector, a first negative active material layer, for a first negative active material layer structure, on a first side of the current collector; and a second negative active material layer on a second side of the current collector. FIG. 1 schematically shows such a negative electrode, and the negative electrode 20 includes a current collector 21, a first negative active material layer 23 on a first side of the current collector, and a second active material layer 25 on a second side of the current collector. In one or more embodiments, the first side and the second side are facing away from each other, as shown in FIG. 1.

In one or more embodiments, a loading level (A) of the first negative active material layer may larger than the loading level (B) of the second negative active material layer. In one or more embodiments, the loading level means the amount of active material per a unit area (g/cm²), and thus, a larger loading level of the first negative active material layer than the loading level of the second negative active material layer indicates that the amount of the negative active material included in the first negative active material layer is larger than that included in the negative active material layer.

The first negative active material layer includes a 1a layer contacted with the current collector (e.g., a 1a layer physically contacting the current collector) and a 1b layer on one side of the 1a layer, and the second negative active material layer is a single layer. As shown in FIG. 1, the first negative active material layer 23 may include a 1a layer 23a contacted with the current collector 21 (e.g., a 1a layer 23a physically contacting the current collector 21) and the 1b layer 23b on one side of the 1a layer 23a.

The 1a layer includes a negative active material including natural graphite, or a mixture of natural graphite and artificial graphite, and the 1b layer includes a negative active material including artificial graphite. If the negative active material satisfies this configuration, the adhesion is excellent, which may ensure excellent negative electrode quality and may reduce overvoltage of the battery during fast charging. If the negative active material of the 1a layer and the negative active material of the 1b layer are both artificial graphite, adherence (e.g., adherence to the current collector) is reduced, which causes the negative electrode quality to deteriorate and increases resistance (e.g., electrical resistance), thereby reducing negative electrode performance. If the negative active material of the 1b layer is natural graphite, the above features may not be obtained due to increases in resistance (e.g., electrical resistance) and precipitation amount during high-rate charging. The natural graphite and/or artificial graphite may have an unspecified shape, a sheet shape, a flake shape, spherical shape, and/or a fiber shape, and it is not limited thereto.

If the negative active material of the 1a layer is a mixture of natural graphite and artificial graphite, a mixing ratio may be about 45:55 by a weight ratio to about 85:15 by a weight ratio, about 50:50 to about 85:15 by a weight ratio, or about 60:40 to about 70:30 by a weight ratio.

The 1a layer may further include a Si-based active material. The Si-based active material may be Si, a silicon-carbon (Si-C) composite, SiOₓ (0<x<2), Si-Q alloy (wherein Q is an element selected from an alkali metal, an alkaline-earth metal, a Group 13 element, a Group 14 element (except for Si)), or a combination thereof. The element Q may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

In one or more embodiments, the Si-C composite may include silicon particles and an amorphous carbon coated on the surface of the silicon particle. For example, the silicon-carbon composite may include a secondary particle where silicon primary particles are agglomerated, and an amorphous carbon coating layer on a surface of the secondary particle. The amorphous carbon may be between the silicon primary particles, for example, to coat the silicon primary particles. The silicon-carbon composite may also include a core in which silicon particles are distributed in an amorphous carbon matrix and an amorphous carbon coating layer coated on a surface of the core.

The secondary particle is provided at the center of the Si-C composite, so it may be referred to as a core or a center part. The amorphous carbon coating layer may be referred to as an outer part or a shell.

The silicon particles may be nano silicon particles. A particle diameter of the silicon nano particles may be about 10 nm to about 1000 nm, or may be about 20 nm to about 900 nm, about 20 nm to about 800 nm, about 20 nm to about 500 nm, about 20 nm to about 300 nm, or about 20 nm to about 150 nm. If the particle diameter of the silicon nano particles is within the foregoing ranges, extreme volume expansion caused during charge and discharge may be suppressed or reduced, and a breakage of the conductive path due to crushing of the particles (e.g., the nano silicon particles) may be prevented or reduced.

A mixing ratio of the nano silicon and the amorphous carbon may be a weight ratio of about 20:80 to about 70:30.

In one or more embodiments, the secondary particle and/or the core may further crystalline carbon. If the silicon-carbon composite further includes crystalline carbon, the Si-C composite may include a secondary particle where silicon primary particles and crystalline carbon are agglomerated, and an amorphous carbon coating layer on a surface of the secondary particle.

If the Si-C includes the silicon particle, the crystalline carbon, and the amorphous carbon, an amount of the amorphous carbon may be about 30 wt% to about 70 wt% based on the total 100 wt% of the Si-C composite and an amount of the crystalline carbon may be about 1 wt% to about 20 wt% based on the total 100 wt% of the Si-C composite. An amount of the silicon particle may be, based on the total 100 wt% of the Si-C composite, about 20 wt% to about 69 wt%, or according to one or more embodiments, about 30 wt% to about 60 wt%.

The particle diameter of the Si-C composite may be suitably or appropriately adjusted, and it is not limited herein.

If the amorphous carbon surrounds the surfaces of the secondary particles, the thickness thereof may be suitably or appropriately adjusted, but, for example, may be about 5 nm to about 100 nm.

If the 1a layer further includes the Si-based active material, an amount of the Si-based active material may be, based on the total 100 wt% of the negative active material and the Si-based active material of the 1a layer, about 1 wt% to about 7 wt%, or about 5.2 wt% to about 6 wt%.

If the 1a layer further includes the Si-based active material, for example, at the amount of the above ranges, long cycle-life may be ensured.

In some embodiments, the Si-based active material is only included in the 1a layer. If the Si-based active material is included in the 1b layer, due to the large expansion of the Si-based active material during charging and discharging, the long cycle-life may not be obtained.

Such a negative electrode includes the first negative active material layer and the second negative active material layer on both sides of the current collector, which are different from each other, as described above. As a result, high capacity owing to high loading level of the first negative active material layer and rapid charge characteristics owing to low loading level of the second negative active material layer may be exhibited, and low resistance (e.g., electrical resistance) of the first negative active material layer, even if it has high loading level, may also reduce the resistance (e.g., electrical resistance) of the battery including the negative electrode. Even if the first negative active material layer is prepared to have a high loading level, decreases in fast charging characteristics due to an increase in resistance (e.g., electrical resistance) may be prevented or reduced.

In one or more embodiments, a ratio (A/B) of the loading level (A) of the first negative active material layer relative to the loading level (B) of the second negative active material layer may be about 1.2 to about 2.2. In another embodiment, the ratio (A/B) may be about 1.22 to about 2.17.

If the ratio (A/B) is within the foregoing ranges, the negative electrode may be readily prepared, and the effects of the fast charging characteristics and increases in capacity may be more enhanced, without increasing resistance (e.g., electrical resistance).

In one or more embodiments, the loading level (A) of the first negative active material layer may be about 10.5 g/cm² to about 22.9 g/cm², about 10.6 g/cm² to about 22.9 g/cm², about 10.64 g/cm² to about 21.59 g/cm², or about 10.64 g/cm² to about 20 g/cm². The loading level (B) of the second negative active material layer may be about 6.11 g/cm² to about 15.1 g/cm², about 6.5 g/cm² to about 11.86 g/cm², about 6.5 g/cm² to about 11.8 g/cm², or about 7 g/cm² to about 10.55 g/cm².

Pores may be present in the first negative active material layer and the second negative active material layer according to one or more embodiments, and for example, the first negative active material layer and the second negative active material layer may both include pores. A ratio (C/D) of a porosity (C) of the first negative active material layer relative to a porosity (D) of the second negative active material layer may be about 1 to about 2, about 1 to about 1.6, or about 1 to about 1.59. If the ratio of the porosities of the first negative active material layer and the second negative active material satisfy the foregoing ranges, overvoltage during high-rate charging may be further reduced. The porosity of the first negative active material layer may be a sum of the porosity of the 1a layer and the porosity of the 1b layer.

In one or more embodiments, the porosity (C) of the first negative active material layer may be about 24% to about 40%, about 24.5% to about 39%, about 27.3% to about 39%, or about 30% to about 34.4%. The porosity (D) of the second negative active material layer may be about 14% to about 40%, about 15% to about 39%, or about 19.81% to about 30%.

In some embodiments, the porosity may be measured by a Barrett-Joyner-Halenda (BJH) method using a nitrogen adsorption method.

In one or more embodiments, the 1a layer of the first negative active material layer may be a dense layer and the 1b layer may be a porous layer. The term dense layer refers to a layer having fewer pores, not a layer having no or substantially no pores, and the term porous layer refers to a layer having relatively more pores. A ratio (F/E) of the porosity (F) of the 1b layer relative to the porosity (E) of the 1a layer may be about 1 to about 2, or about 1.15 to about 1.72.

If the ratio of the porosities of the 1a layer and the 1b layer is within the foregoing ranges, the tortuosity of the negative electrode may be reduced.

In one or more embodiments, the porosity (E) of the 1a layer may be about 20% to about 38%, about 22% to about 36%, or about 22.7% to about 32%. The porosity (F) of the 1b layer may be about 25% to about 43%, about 27% to about 41.5%, or about 34.7% to about 39%.

In one or more embodiments, a thickness of the 1a layer may be, based on the total thickness of the first negative active material layer, about 30% to about 55%, or about 30% to about 49%. A thickness of the 1b layer may be, based on the total thickness of the first negative active material layer, about 45% to about 70%, or about 51% to about 70%. For example, in one or more embodiments, the first negative active material layer consists of the 1a layer and the 1b layer, and thus, if the total thickness of the first negative active material layer is considered to be about 100%, if the thickness of the 1a layer is about 49%, the thickness of the 1b layer corresponds to about 51%.

Referring to FIG. 1 for illustration, the thickness a of the 1a layer 23a shown in FIG. 1 corresponds to about 30% to about 55% of the total thickness (h) of the first negative active material layer 23, and the thickness b of the 1b layer 23b corresponds to about 45% to about 70% of the total thickness (h) of the first negative active material layer 23.

In one or more embodiments, the first negative active material layer and the second negative active material layer include a binder, and may further include a conductive material (e.g., an electrically conductive material). In the first negative active material layer and the second negative active material layer, the binder and/or the conductive material may be the same to or different from each other.

Amounts of the negative active materials in the first negative active material layer and the second negative active material layer may be suitably or appropriately adjusted.

In the first negative active material layer and the second negative active material layer, an amount of the binder may be about 1 wt% to about 5 wt% based on the total weight of each negative active material layer. In case of further including the conductive material, the binder may be included at an amount of about 1 wt% to about 5 wt% and the conductive material may be included at an amount of about 1 wt% to about 5 wt%.

The binder improves binding properties of negative active material particles with one another and with a current collector. The binder may include a non-aqueous binder, an aqueous binder, or a combination thereof.

The non-aqueous-based binder may include an ethylene propylene copolymer, polyacrylonitrile, polystyrene, polyvinyl chloride, carboxylated polyvinyl chloride, polyvinyl fluoride, polyurethane, polytetrafluoroethylene, polyvinylidene fluoride, polyethylene, polypropylene, polyamideimide, polyimide, or a combination thereof.

The aqueous binder may include a styrene-butadiene rubber (SBR), an acrylated styrene-butadiene rubber (ABR), an acrylonitrile-butadiene rubber, an acryl rubber, a butyl rubber, a fluorine rubber, an ethylene oxide-containing polymer, polyvinyl pyrrolidone, polypropylene, polyepichlorohydrin, polyphosphazene, an ethylene propylene diene copolymer, polyvinyl pyridine, chlorosulfonated polyethylene, latex, a polyester resin, an acrylic resin, a phenolic resin, an epoxy resin, polyvinyl alcohol, or a combination thereof.

If the aqueous binder is used as a negative electrode binder, a cellulose-based compound may be further used to provide or increase viscosity. The cellulose-based compound includes one or more of carboxymethyl cellulose, hydroxypropylmethyl cellulose, methyl cellulose, and/or alkali metal salts thereof. The alkali metal may be Na, K, and/or Li. The cellulose-based compound may be included in an amount of about 0.1 parts by weight to about 3 parts by weight based on 100 parts by weight of the negative active material. The cellulose-based compound may be referred to as a thickener and may impart or increase viscosity, and it may serve as a binder, and thus, may be referred to as a binder. An amount of the cellulose-based compound may be suitably or appropriately adjusted and is not necessarily limited herein.

The conductive material is included to provide electrode conductivity (e.g., electrical conductivity), and any suitable electrically conductive material may be used as a conductive material (e.g., an electrically conductive material) unless it causes a chemical change (e.g., an undesirable chemical change in the battery). Examples of the conductive material may include a carbon-based material such as natural graphite, artificial graphite, carbon black, acetylene black, ketjen black, channel black, furnace black, lamp black, thermal black, carbon fiber, and/or the like; a metal-based material of a metal powder and/or a metal fiber including copper, nickel, aluminum, silver, and/or the like; a conductive polymer (e.g., an electrically conductive polymer) such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal (e.g., an electrically conductive metal), and a combination thereof.

The first negative active material layer of the negative electrode according to one or more embodiments may be prepared by the following procedures. In the negative electrode preparation, the second negative active material layer is prepared by a general procedure including coating a negative active material composition on the current collector, drying, and pressurizing, and thus, further description thereof is not necessary here.

The negative active material, the binder, and optionally the conductive material are mixed together in a solvent to prepare a 1a layer composition and a 1b layer composition, respectively.

The 1a layer composition and the 1b layer composition may be concurrently (e.g., simultaneously) coated on a current collector, and dried followed by pressurizing to prepare a first negative active material layer in which the 1a layer and the 1b layer are sequentially formed on the current collector.

In another embodiment, to prepare a first negative active material layer in which the 1a layer and the 1b layer are sequentially formed, the first negative active material layer may prepared by coating the 1a layer composition on a current collector, drying, and pressurizing to prepare a 1a layer, and then coating the 1b layer composition on the 1a layer, drying, and pressurizing to prepare the 1b layer on the 1a layer.

Another embodiment provides a rechargeable lithium battery including the negative electrode, a positive electrode, and an electrolyte.

The positive electrode may include a current collector and a positive active material layer on the current collector. The positive active material may include a compound (e.g., a lithiated intercalation compound) that is capable of intercalating and deintercalating lithium. In some embodiments, at least one of a composite oxide of lithium and a metal selected from cobalt, manganese, nickel, or combinations thereof may be used. For example, a compound represented by Chemical Formulas may be used. LiₐA_{1-b}X_{b}D¹₂ (0.90 ≤ a ≤ 1.8, 0 ≤ b ≤ 0.5); LiₐA_{1-b}X_{b}O_{2-c1}D¹_{c1} (0.90 ≤ a ≤ 1.8, 0 ≤ b ≤ 0.5, 0 ≤ c1 ≤ 0.05); LiₐE_{1-b}X_{b}O_{2-c1}D¹_{c1} (0.90 ≤ a ≤ 1.8, 0 ≤ b ≤ 0.5, 0 ≤ c1 ≤ 0.05); LiₐE_{2-b}X_{b}O_{4-c1}D¹_{c1} (0.90 ≤ a ≤ 1.8, 0 ≤ b ≤ 0.5, 0 ≤ c1 ≤ 0.05); LiₐNi_{1-b-c}Co_{b}X_{c}D¹ₐ (0.90 ≤ a ≤ 1.8, 0 ≤ b ≤ 0.5, 0 ≤ c ≤ 0.5, 0< a ≤ 2); LiₐNi_{1-b-c}Co_{b}X_{c}O₂₋ₐTₐ (0.90 ≤ a ≤ 1.8, 0 ≤ b ≤ 0.5, 0 ≤ c ≤ 0.5, 0< a <2); LiₐNi_{1-b-c}Co_{b}X_{c}O₂₋ₐT₂ (0.90 ≤ a ≤ 1.8, 0 ≤ b ≤ 0.5, 0 ≤ c ≤ 0.5, 0< a <2); LiₐNi_{1-b-c}Mn_{b}X_{c}D¹ₐ (0.90 ≤ a ≤ 1.8, 0 ≤ b ≤ 0.5, 0 ≤ c ≤ 0.5, 0< a ≤ 2); LiₐNi_{1-b-c}Mn_{b}X_{c}O₂₋ₐTₐ (0.90 ≤ a ≤ 1.8, 0 ≤ b ≤ 0.5, 0 ≤ c ≤ 0.5, 0< a <2); LiₐNi_{1-b-c}Mn_{b}X_{c}O₂₋ₐT₂ (0.90 ≤ a ≤ 1.8, 0 ≤ b ≤ 0.5, 0 ≤ c ≤ 0.5, 0< a <2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}L¹_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1) LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄; Li_{(3-f)}J₂(PO₄)₃ (0 ≤ f ≤ 2); Li_{(3-f)}Fe₂(PO₄)₃ (0 ≤ f ≤ 2); LiₐFePO₄ (0.90 ≤ a ≤ 1.8)

In the above Chemical Formulas, A is Ni, Co, Mn, or a combination thereof; X is Al, Ni, Co, Mn, Cr, Fe, Mg, Sr, V, a rare earth element, or a combination thereof; D¹ is O, F, S, P, or a combination thereof; E is Co, Mn, or a combination thereof; T is F, S, P, or a combination thereof; G is Al, Cr, Mn, Fe, Mg, La, Ce, Sr, V, or a combination thereof; Q is Ti, Mo, Mn, or a combination thereof; Z is Cr, V, Fe, Sc, Y, or a combination thereof; J is V, Cr, Mn, Co, Ni, Cu, or a combination thereof; L¹ is Mn, Al, or a combination thereof.

The compounds may have a coating layer on the surface, or may be mixed together with another compound having a coating layer. The coating layer may include at least one coating element compound selected from an oxide of a coating element, a hydroxide of the coating element, an oxyhydroxide of the coating element, an oxycarbonate of the coating element, or a hydroxyl carbonate of the coating element. The compound for the coating layer may be amorphous and/or crystalline. The coating element included in the coating layer may include Mg, Al, Co, K, Na, Ca, Si, Ti, V, Sn, Ge, Ga, B, As, Zr, or mixtures thereof. The coating layer may be provided utilizing a method having no or substantially no adverse influence on properties of a positive active material by using these elements in the compound, and for example, the method may include any suitable coating method such as spray coating, dipping, and/or the like, but is not illustrated in more detail because it should be readily apparent to those of ordinary skill in the art upon reviewing this disclosure, and thus, further description thereof is not necessary here.

In the positive electrode, an amount of the positive active material may be about 90 wt% to about 98 wt% based on the total weight of the positive active material layer.

The positive active material layer may further include a binder and a conductive material (e.g., an electrically conductive material). The binder and the conductive material may be included in an amount of about 1 wt% to about 5 wt%, respectively based on the total amount of the positive active material layer.

The binder improves binding properties of positive active material particles with one another and with a current collector. Examples of the binder may be polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing a polymer, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is the binder not limited thereto.

The conductive material is included to provide electrode conductivity (e.g., electrical conductivity), and any suitable electrically conductive material may be used as a conductive material (e.g., an electrically conductive material) unless it causes a chemical change (e.g., an undesirable chemical change in the battery). Examples of the conductive material may include a carbon-based material such as natural graphite, artificial graphite, carbon black, acetylene black, ketjen black, carbon fiber, and/or the like; metal-based material of a metal powder and/or a metal fiber including copper, nickel, aluminum, silver, and/or the like; a conductive polymer (e.g., an electrically conductive polymer) such as polyphenylene derivatives, and/or the like; or mixtures thereof.

The current collector may be Al, but is not limited thereto.

The positive electrode may be prepared by mixing together an active material, binder, and a conductive material (e.g., an electrically conductive material) in a solvent to prepare an active material composition and coating the active material composition on a current collector. Such a positive electrode method of preparation should be readily apparent to those of ordinary skill in the art upon reviewing this disclosure, and thus, it is not necessary to further describe the method in more detail here. The solvent may be N-methyl pyrrolidone, but the solvent is not limited thereto. If the negative electrode uses the aqueous binder, the solvent used in the negative active material composition preparation may be water.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, and/or aprotic solvent. The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, propyl propionate decanolide, valerolactone, mevalonolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone, and/or the like. The alcohol-based solvent may include ethyl alcohol, isopropyl alcohol, and/or the like, and the aprotic solvent may include nitriles such as R-CN (where R is a C2 to C20 linear, branched, or cyclic hydrocarbon, and may include a double bond, an aromatic ring, or an ether bond), amides such as dimethylformamide, dioxolanes such as 1,3-dioxolane, 1,4-dioxolane, and/or the like, sulfolanes, and/or the like.

The organic solvent may be used alone or in a mixture. If the organic solvent is used in a mixture, the mixture ratio may be controlled in accordance with a suitable or desirable battery performance and it may be any suitable one generally utilized in the related art.

If the non-aqueous organic solvent is mixed and used, a mixed solvent of a cyclic carbonate and a chain carbonate, a mixed solvent of a cyclic carbonate and a propionate-based solvent, or a mixed solvent of a cyclic carbonate, a chain carbonate, and a propionate-based solvent may be used. The propionate-based solvent may be methyl propionate, ethyl propionate, propyl propionate, or a combination thereof.

If the cyclic carbonate and the chain carbonate or the cyclic carbonate and the propionate-based solvent are mixed together, they may be mixed together in a volume ratio of about 1:1 to about 1:9 and thus performance of an electrolyte may be improved. If the cyclic carbonate, the chain carbonate, and the propionate-based solvent are mixed together, they may be mixed together in a volume ratio of about 1:1:1 to about 3:3:4. The mixing ratios of the solvents may be suitably or appropriately adjusted according to suitable or desirable properties.

The organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

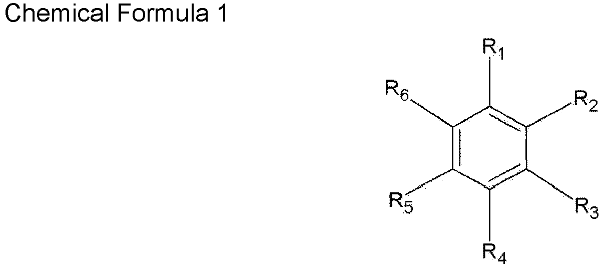

In Chemical Formula 1, R₁ to R₆ are the same or different and are selected from hydrogen, a halogen, a C1 to C10 alkyl group, a haloalkyl group, and a combination thereof.

Examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The electrolyte may further include vinylethyl carbonate, vinylene carbonate and/or an ethylene carbonate-based compound represented by Chemical Formula 2, as an additive for improving cycle life.

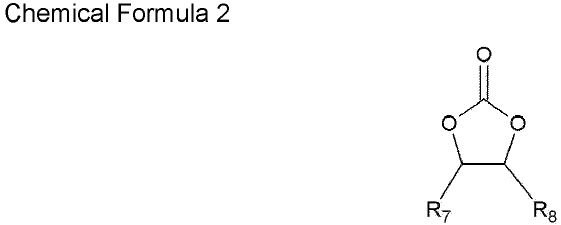

In Chemical Formula 2, R₇ and R₈ are the same or different and may each independently be hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may include difluoro ethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and/or the like. If further using the additive for improving cycle life, an amount of the additive may be suitably controlled within a suitable or appropriate range.

The lithium salt dissolved in an organic solvent supplies a battery with lithium ions, basically operates the rechargeable lithium battery, and improves transportation of the lithium ions between positive and negative electrodes. Examples of the lithium salt include at least one or two supporting salts selected from LiPF₆, LiBF₄, LiSbF₆, LiAsF₆, LiN (SO₂C₂F₅)₂, Li (CF₃SO₂)₂N, LiN (SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN (CₓF₂ₓ₊₁SO₂)(C_{y}F_{2y+1}SO₂) herein x and y are natural numbers, for example, an integer of about 1 to about 20), lithium difluoro(bisoxolato) phosphate), LiCl, Lil, LiB(C₂O₄)₂ (lithium bis(oxalato) borate: LiBOB), or lithium difluoro(oxalato)borate (LiDFOB). A concentration of the lithium salt may be in a range from about 0.1 M to about 2.0 M. If the lithium salt is included at the above concentration range, an electrolyte may have excellent performance and lithium ion mobility due to suitable or optimal electrolyte conductivity and viscosity.

A separator may be between the positive electrode and the negative electrode depending on a type (or kind) of a rechargeable lithium battery. The separator may use polyethylene, polypropylene, polyvinylidene fluoride or multi-layers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and/or the like.

The separator may include a porous substrate and a ceramic-included coating layer on at least one surface of the porous substrate. The ceramic may include SiO₂, Al₂O₃, Al (OH)₃, AlO(OH), TiO₂, BaTiO₂, ZnO₂, Mg (OH)₂, MgO, Ti (OH)₄, ZrO₂, aluminum nitride, silicon carbide, boron nitride, or a combination thereof.

According to one or more embodiments, the separator may be a composite porous separator including a porous substrate and a functional layer on the porous substrate. The coating layer may also be a functional layer that is capable of adding or providing additional functions, and for example, may be at least one selected from a heat-resistance layer and an adhesive layer. The heat-resistance layer may include a heat-resistance resin and optionally a filler. In some embodiments, the adhesive layer may include an adhesive resin and optionally a filler. The filler may be an organic filler, an inorganic filler, or combinations thereof. The heat-resistance resin and the adhesive resin may be any suitable materials which may be used in a separator in the related art.

The rechargeable lithium battery may be classified into a lithium ion battery, a lithium ion polymer battery, or a lithium polymer battery depending on the types (or kinds) of the separator and the electrolyte, may be classified into cylindrical, prismatic, coin-type, or pouch-type depending on the shape, and may be classified into a bulk type or a thin film type depending on a size. The structure and fabrication of such batteries may be any suitable ones generally utilized in the art, and thus, further description thereof in more detail is not necessary here.

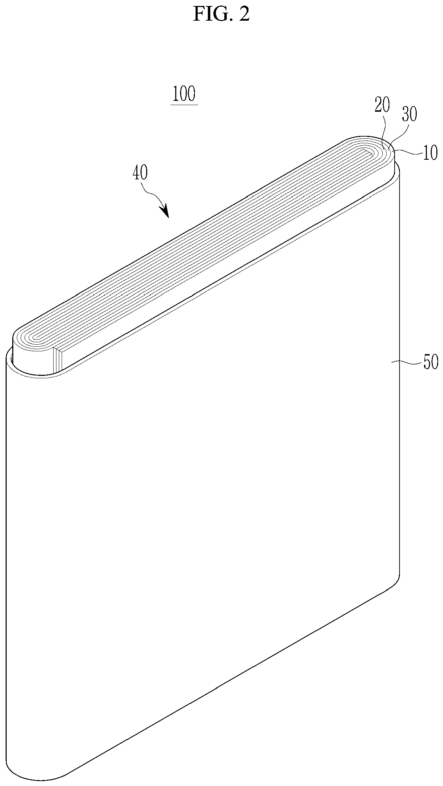

FIG. 2 is a schematic perspective view of a rechargeable lithium battery according to an embodiment of the present disclosure. The rechargeable lithium battery according to an embodiment is illustrated as a prismatic battery but is not limited thereto and may include variously-shaped batteries such as a cylindrical battery, a pouch battery, and/or the like.

Referring to FIG. 2, a rechargeable lithium battery 100 according to an embodiment may include an electrode assembly 40 manufactured by winding a separator 30 between a positive electrode 10 and a negative electrode 20 and a case 50 housing the electrode assembly 40. An electrolyte may be impregnated in the positive electrode 10, the negative electrode 20 and the separator 30.

Hereinafter, examples of the present disclosure and comparative examples are described. These examples, however, are not in any sense to be interpreted as limiting the scope of the present disclosure.

### Example 1

29.1 wt% of artificial graphite, 67.9 wt% of natural graphite, 1.2 wt% of carboxymethyl cellulose, and 1.8 wt% of a styrene-butadiene rubber were mixed together in pure water to prepare a 1a layer slurry of a first negative active material layer.

97.5 wt% of artificial graphite, 1.0 wt% of carboxymethyl cellulose, and 1.5 wt% of a styrene-butadiene rubber were mixed together in pure water to prepare a 1b layer slurry of a first negative active material layer.

63.4 wt% of artificial graphite, 34.1 wt% of natural graphite, 1.0 wt% of carboxymethyl cellulose, and 1.5 wt% of a styrene-butadiene rubber were mixed together in pure water to prepare a second negative active material layer slurry.

On a first side of a copper foil current collector, the 1a layer slurry and the 1b layer slurry were concurrently coated and dried to prepare a first negative active material layer including a 1a layer and a 1b layer.

Thereafter, on a second side of the current collector which was opposite to the first side, the second negative active material layer slurry was coated and dried to prepare a second negative active material layer, and then pressurized to prepare a negative electrode.

In the prepared negative electrode, a loading level (A) of the first negative active material layer was 11.57 g/cm² and a thickness of the first negative active material layer was 87 µm. A thickness of the 1a layer was 42.5 µm and a thickness of the 1b layer was 44.5 µm. The 1a layer had a porosity (E) of 35.72%, the 1b layer had a porosity (F) was 41.08%, and the overall porosity (C) of the first negative active material layer was 38.4%. A loading level (B) of the second negative active material layer was 9.48 g/cm², an entire porosity (D) of the second negative active material layer was 38.4%, and a thickness of the second negative active material layer was 71.3 µm.

### Example 2

17.5 wt% of artificial graphite, 79.5 wt% of natural graphite, 1.2 wt% of carboxymethyl cellulose, and 1.8 wt% of a styrene-butadiene rubber were mixed together in pure water to prepare a 1a layer slurry of a first negative active material layer.

97.5 wt% of artificial graphite, 1.0 wt% of carboxymethyl cellulose, and 1.5 wt% of a styrene-butadiene rubber were mixed together in pure water to prepare a 1b layer slurry of a first negative active material layer.

57.5 wt% of artificial graphite, 40 wt% of natural graphite, 1.0 wt% of carboxymethyl cellulose, and 1.5 wt% of a styrene-butadiene rubber were mixed in pure water to prepare a second negative active material layer slurry.

On a first side of a copper foil current collector, the 1a layer slurry and the 1b layer slurry were concurrently coated and dried to prepare a first negative active material layer including a 1a layer and a 1b layer.

Thereafter, on a second side of the current collector which was opposite to the first side, the second negative active material layer slurry was coated and dried to prepare a second negative active material layer, and then pressurized to prepare a negative electrode.

In the prepared negative electrode, a loading level (A) of the first negative active material layer was 14.58 g/cm² and a thickness of the first negative active material layer was 98.6 µm. A thickness of the 1a layer was 48.7 µm and a thickness of the 1b layer was 49.9 µm. The 1a layer had a porosity (E) of 29.3%, the 1b layer had a porosity (F) was 33.7%, and the entire porosity (C) of the first negative active material layer was 31.5%. A loading level (B) of the second negative active material layer was 6.72 g/cm², an entire porosity (D) of the second negative active material layer was 31.5%, and a thickness of the second negative active material layer was 45.5 µm.

### Example 3

38.8 wt% of artificial graphite, 58.2 wt% of natural graphite, 1.2 wt% of carboxymethyl cellulose, and 1.8 wt% of a styrene-butadiene rubber were mixed together in pure water to prepare a 1a layer slurry of a first negative active material layer.

97.5 wt% of artificial graphite, 1.0 wt% of carboxymethyl cellulose, and 1.5 wt% of a styrene-butadiene rubber were mixed together in pure water to prepare a 1b layer slurry of a first negative active material layer.

68.2 wt% of artificial graphite, 29.3 wt% of natural graphite, 1.0 wt% of carboxymethyl cellulose, and 1.5 wt% of a styrene-butadiene rubber were mixed together in pure water to prepare a second negative active material layer slurry.

On a first side of a copper foil current collector, the 1a layer slurry and the 1b layer slurry were concurrently coated and dried to prepare a first negative active material layer including a 1a layer and a 1b layer.

Thereafter, on a second side of the current collector which was opposite to the first side, the second negative active material layer slurry was coated and dried to prepare a second negative active material layer, and then pressurized to prepare a negative electrode.

In the prepared negative electrode, a loading level (A) of the first negative active material layer was 13.62 g/cm² and a thickness of the first negative active material layer was 96.2 µm. A thickness of the 1a layer was 46.5 µm and a thickness of the 1b layer was 49.7 µm. The 1a layer had a porosity (E) of 32%, the 1b layer had a porosity (F) was 36.8%, and the entire porosity (C) of the first negative active material layer was 34.4%. A loading level (B) of the second negative active material layer was 7.48 g/cm², an entire porosity (D) of the second negative active material layer was 34.4%, and a thickness of the second negative active material layer was 52.7 µm.

### Example 4

17.5 wt% of artificial graphite, 79.5 wt% of natural graphite, 1.2 wt% of carboxymethyl cellulose, and 1.8 wt% of a styrene-butadiene rubber were mixed together in pure water to prepare a 1a layer slurry of a first negative active material layer.

97.5 wt% of artificial graphite, 1.0 wt% of carboxymethyl cellulose, and 1.5 wt% of a styrene-butadiene rubber were mixed together in pure water to prepare a 1b layer slurry of a first negative active material layer.

19.5 wt% of artificial graphite, 78 wt% of natural graphite, 1.0 wt% of carboxymethyl cellulose, and 1.5 wt% of a styrene-butadiene rubber were mixed together in pure water to prepare a second negative active material layer slurry.

On a first side of a copper foil current collector, the 1a layer slurry and the 1b layer slurry were concurrently coated and dried to prepare a first negative active material layer including a 1a layer and a 1b layer.

Thereafter, on a second side of the current collector which was opposite to the first side, the second negative active material layer slurry was coated and dried to prepare a second negative active material layer, and then pressurized to prepare a negative electrode.

In the prepared negative electrode, a loading level (A) of the first negative active material layer was 11.54 g/cm² and a thickness of the first negative active material layer was 84.5 µm. A thickness of the 1a layer was 41.2 µm and a thickness of the 1b layer was 43.3 µm. The 1a layer had a porosity (E) of 34.1%, the 1b layer had a porosity (F) was 39.2%, and the entire porosity (C) of the first negative active material layer was 36.7%. A loading level (B) of the second negative active material layer was 9.46 g/cm², an entire porosity (D) of the second negative active material layer was 23.08%, and a thickness of the second negative active material layer was 56.8 µm.

### Example 5

48.5 wt% of artificial graphite, 48.5 wt% of natural graphite, 1.2 wt% of carboxymethyl cellulose, and 1.8 wt% of a styrene-butadiene rubber were mixed together in pure water to prepare a 1a layer slurry of a first negative active material layer.

97.5 wt% of artificial graphite, 1.0 wt% of carboxymethyl cellulose, and 1.5 wt% of a styrene-butadiene rubber were mixed together in pure water to prepare a 1b layer slurry of a first negative active material layer.

63.4 wt% of artificial graphite, 34.1 wt% of natural graphite, 1.0 wt% of carboxymethyl cellulose, and 1.5 wt% of a styrene-butadiene rubber were mixed together in pure water to prepare a second negative active material layer slurry.

On a first side of a copper foil current collector, the 1a layer slurry and the 1b layer slurry were concurrently coated and dried to prepare a first negative active material layer including a 1a layer and a 1b layer.

Thereafter, on a second side of the current collector which was opposite to the first side, the second negative active material layer slurry was coated and dried to prepare a second negative active material layer, and then pressurized to prepare a negative electrode.

In the prepared negative electrode, a loading level (A) of the first negative active material layer was 11.54 g/cm² and a thickness of the first negative active material layer was 76.6 µm. A thickness of the 1a layer was 21 µm and a thickness of the 1b layer was 55.6 µm. The 1a layer had a porosity (E) of 22.2%, the 1b layer had a porosity (F) was 38.2%, and the entire porosity (C) of the first negative active material layer was 30.2%. A loading level (B) of the second negative active material layer was 9.46 g/cm², an entire porosity (D) of the second negative active material layer was 30.2%, and a thickness of the second negative active material layer was 62.8 µm.

### Example 6

40.2 wt% of artificial graphite, 56.8 wt% of natural graphite, 1.2 wt% of carboxymethyl cellulose, and 1.8 wt% of a styrene-butadiene rubber were mixed together in pure water to prepare a 1a layer slurry of a first negative active material layer.

97.5 wt% of artificial graphite, 1.0 wt% of carboxymethyl cellulose, and 1.5 wt% of a styrene-butadiene rubber were mixed together in pure water to prepare a 1b layer slurry of a first negative active material layer.

19.5 wt% of artificial graphite, 78 wt% of natural graphite, 1.0 wt% of carboxymethyl cellulose, and 1.5 wt% of a styrene-butadiene rubber were mixed together in pure water to prepare a second negative active material layer slurry.

On a first side of a copper foil current collector, the 1a layer slurry and the 1b layer slurry were concurrently coated and dried to prepare a first negative active material layer including a 1a layer and a 1b layer.

Thereafter, on a second side of the current collector which was opposite to the first side, the second negative active material layer slurry was coated and dried to prepare a second negative active material layer, and then pressurized to prepare a negative electrode.

In the prepared negative electrode, a loading level (A) of the first negative active material layer was 14.41 g/cm² and a thickness of the first negative active material layer was 88.4 µm. A thickness of the 1a layer was 26 µm and a thickness of the 1b layer was 62.4 µm. The 1a layer had a porosity (E) of 22.8%, the 1b layer had a porosity (F) was 26.2%, and the entire porosity (C) of the first negative active material layer was 24.5%. A loading level (B) of the second negative active material layer was 6.64 g/cm², an entire porosity (D) of the second negative active material layer was 15.41%, and a thickness of the second negative active material layer was 36.4 µm.

### Example 7

24.2 wt% of artificial graphite, 72.8 wt% of natural graphite, 1.2 wt% of carboxymethyl cellulose, and 1.8 wt% of a styrene-butadiene rubber were mixed together in pure water to prepare a 1a layer slurry of a first negative active material layer.

97.5 wt% of artificial graphite, 1.0 wt% of carboxymethyl cellulose, and 1.5 wt% of a styrene-butadiene rubber were mixed together in pure water to prepare a 1b layer slurry of a first negative active material layer.

68.3 wt% of artificial graphite, 29.3 wt% of natural graphite, 1.0 wt% of carboxymethyl cellulose, and 1.5 wt% of a styrene-butadiene rubber were mixed together in pure water to prepare a second negative active material layer slurry.

On a first side of a copper foil current collector, the 1a layer slurry and the 1b layer slurry were concurrently coated and dried to prepare a first negative active material layer including a 1a layer and a 1b layer.

Thereafter, on a second side of the current collector which was opposite to the first side, the second negative active material layer slurry was coated and dried to prepare a second negative active material layer, and then pressurized to prepare a negative electrode.

In the prepared negative electrode, a loading level (A) of the first negative active material layer was 14.44 g/cm² and a thickness of the first negative active material layer was 92 µm. A thickness of the 1a layer was 33.2 µm and a thickness of the 1b layer was 58.8 µm. The 1a layer had a porosity (E) of 20.1%, the 1b layer had a porosity (F) was 34.5%, and the entire porosity (C) of the first negative active material layer was 27.2%. A loading level (B) of the second negative active material layer was 6.66 g/cm², an entire porosity (D) of the second negative active material layer was 27.24%, and a thickness of the second negative active material layer was 42.4 µm.

### Example 8

27.2 wt% of artificial graphite, 58.2 wt% of natural graphite, 11.6 wt% of a silicon-carbon composite, 1.2 wt% of carboxymethyl cellulose, and 1.8 wt% of a styrene-butadiene rubber were mixed together in pure water to prepare a 1a layer slurry of a first negative active material layer.

97.5 wt% of artificial graphite, 1.0 wt% of carboxymethyl cellulose, and 1.5 wt% of a styrene-butadiene rubber were mixed together in pure water to prepare a 1b layer slurry of a first negative active material layer.

The silicon-carbon composite used in the 1a layer included a soft carbon coating layer on an agglomerated product where silicon nano particles having an average particle diameter D50 of 100 nm and soft carbon were agglomerated. Based on the total weight of the silicon-carbon composite, an amount of the silicon nano particles was 54 wt% and an amount of the soft carbon was 46 wt%, and a thickness of the soft carbon coating layer was 100 nm.

68.3 wt% of artificial graphite, 29.3 wt% of natural graphite, 1.0 wt% of carboxymethyl cellulose, and 1.5 wt% of a styrene-butadiene rubber were mixed together in pure water to prepare a second negative active material layer slurry.

On a first side of a copper foil current collector, the 1a layer slurry and the 1b layer slurry were concurrently coated and dried to prepare a first negative active material layer including a 1a layer and a 1b layer.

Thereafter, on a second side of the current collector which was opposite to the first side, the second negative active material layer slurry was coated and dried to prepare a second negative active material layer, and then pressurized to prepare a negative electrode.

In the prepared negative electrode, a loading level (A) of the first negative active material layer was 10.64 g/cm² and a thickness of the first negative active material layer was 73.4 µm. A thickness of the 1a layer was 36.7 µm and a thickness of the 1b layer was 38.3 µm. The 1a layer had a porosity (E) of 30.2%, the 1b layer had a porosity (F) was 34.8%, and the entire porosity (C) of the first negative active material layer was 32.5%. A loading level (B) of the second negative active material layer was 8.73 g/cm², an entire porosity (D) of the second negative active material layer was 32.5%, and a thickness of the second negative active material layer was 60 µm.

### Comparative Example 1

63 wt% of artificial graphite, 34 wt% of natural graphite, 1.2 wt% of carboxymethyl cellulose, and 1.8 wt% of a styrene-butadiene rubber were mixed together in pure water to prepare a first negative active material layer slurry and a second negative active material layer slurry, respectively.

On a first side of a copper foil current collector, the first negative active material layer slurry was coated and dried to prepare a first negative active material layer, and then the second negative active material layer slurry was coated on a second side of the current collector which was opposite to the first side, and dried to prepare a second negative active material layer, and then pressurized to prepare a negative electrode.

In the prepared negative electrode, loading levels of the first and second negative active material layers were respectively 10.7 g/cm², thicknesses and porosities of the first and the second negative active material layers were respectively 69 µm and 26%.

### Comparative Example 2

63.0 wt% of artificial graphite, 34 wt% of natural graphite, 1.2 wt% of carboxymethyl cellulose, and 1.8 wt% of a styrene-butadiene rubber were mixed together in pure water to prepare a 1a layer slurry of a first negative active material layer.

63.4 wt% of artificial graphite, 34.1 wt% of natural graphite, 1.0 wt% of carboxymethyl cellulose, and 1.5 wt% of a styrene-butadiene rubber were mixed together in pure water to prepare a 1b layer slurry of a first negative active material layer.

68.2 wt% of artificial graphite, 29.3 wt% of natural graphite, 1.0 wt% of carboxymethyl cellulose, and 1.5 wt% of a styrene-butadiene rubber were mixed together in pure water to prepare a second negative active material layer slurry.

On a first side of a copper foil current collector, the 1a layer slurry and the 1b layer slurry were concurrently coated and dried to prepare a first negative active material layer including a 1a layer and a 1b layer.

Thereafter, on a second side of the current collector which was opposite to the first side, the second negative active material layer slurry was coated and dried to prepare a second negative active material layer, and then pressurized to prepare a negative electrode.

In the prepared negative electrode, a loading level (A) of the first negative active material layer was 10.14 g/cm² and a thickness of the first negative active material layer was 71.3 µm. A thickness of the 1a layer was 35.1 µm and a thickness of the 1b layer was 36.2 µm. The 1a layer had a porosity (E) of 30.23%, the 1b layer had a porosity (F) was 34.77%, and the entire porosity (C) of the first negative active material layer was 32.5%. A loading level (B) of the second negative active material layer was 11.26 g/cm², an entire porosity (D) of the second negative active material layer was 32.5%, and a thickness of the second negative active material layer was 79.1 µm.

### Comparative Example 3

97 wt% of natural graphite, 1.2 wt% of carboxymethyl cellulose, and 1.8 wt% of a styrene-butadiene rubber were mixed together in pure water to prepare a 1a layer slurry of a first negative active material layer.

98 wt% of natural graphite, 0.8 wt% of carboxymethyl cellulose, and 1.2 wt% of a styrene-butadiene rubber were mixed together in pure water to prepare a 1b layer slurry of a first negative active material layer.

97.5 wt% of natural graphite, 1.0 wt% of carboxymethyl cellulose, and 1.5 wt% of a styrene-butadiene rubber were mixed together in pure water to prepare a second negative active material layer slurry.

On a first side of a copper foil current collector, the 1a layer slurry and the 1b layer slurry were concurrently coated and dried to prepare a first negative active material layer including a 1a layer and a 1b layer.

Thereafter, on a second side of the current collector which was opposite to the first side, the second negative active material layer slurry was coated and dried to prepare a second negative active material layer, and then pressurized to prepare a negative electrode.

In the prepared negative electrode, a loading level (A) of the first negative active material layer was 11.82 g/cm² and a thickness of the first negative active material layer was 70.6 µm. A thickness of the 1a layer was 34.4 µm and a thickness of the 1b layer was 36.2 µm. The 1a layer had a porosity (E) of 21.14%, the 1b layer had a porosity (F) was 23.26%, and the entire porosity (C) of the first negative active material layer was 22.2%. A loading level (B) of the second negative active material layer was 9.68 g/cm², an entire porosity (D) of the second negative active material layer was 38.4%, and a thickness of the second negative active material layer was 71.3 µm.

### Fabrication of cell

The respective negative electrodes of Examples 1 to 8 and Comparative Examples 1 to 3, and a LiCoO₂ positive electrode were used, and a polyethylene/polypropylene multilayer separator was interposed between the negative electrode and the positive electrode to prepare an electrode assembly. The electrode assembly and an electrolyte prepared by adding 1.0 M LiPF5 lithium salt to a mixed solvent of ethylene carbonate and diethyl carbonate at a 50:50 volume ratio were used to fabricate a coin full cell.

The configuration of the negative electrode of Examples 1 to 8 and Comparative Examples 1 to 3 are summarized in Table 1.

**Table 1**

| | Ratio of loading level (A/B) | Ratio (F/E) of porosity of 1b layer/porosity of 1a layer | Porosity ratio (C/D) of first negative active material layer/second negative active material layer |
|---|---|---|---|
| Example 1 | 1.22 | 1.15 | 1 |
| Example 2 | 2.17 | 1.15 | 1 |
| Example 3 | 1.82 | 1.15 | 1 |
| Example 4 | 1.22 | 1.15 | 1.59 |
| Example 5 | 1.22 | 1.72 | 1 |
| Example 6 | 2.17 | 1.15 | 1.59 |
| Example 7 | 2.17 | 1.72 | 1 |
| Example 8 | 1.22 | 1.15 | 1 |
| Comparative Example 1 | 1 | - | 1 |
| Comparative Example 2 | 0.9 | 1.15 | 1 |
| Comparative Example 3 | 1.22 | 1.1 | 1 |

### Experimental Example 1: Evaluation of rate charge and discharge of cell

The cells including the negative electrodes of Examples 1 to 8 and Comparative Examples 1 to 3 were once formation charged and discharged at 0.33 C and 25 °C. The cells that underwent the formation charge and discharge were charged and discharged once at each rate, while rate was being changed as follows.
0.5 C-charge: constant current-constant voltage (CC-CV), 0.5 C, upper limit voltage 4.25 V, 0.05 C cut-off/ discharge: 0.33 C, 2.8 V discharge
1.0 C-charge: constant current-constant voltage (CC-CV), 1.0 C, upper limit voltage 4.25 V, 0.05 C cut-off/ discharge: 0.33 C, 2.8 V discharge
1.5 C-charge: constant current-constant voltage (CC-CV), 1.5 C, upper limit voltage 4.25 V, 0.05 C cut-off/ discharge: 0.33 C, 2.8 V discharge
2 C-charge: constant current-constant voltage (CC-CV), 2 C, upper limit voltage 4.25 V, 0.05 C cut-off/ discharge: 0.33 C, 2.8 V discharge

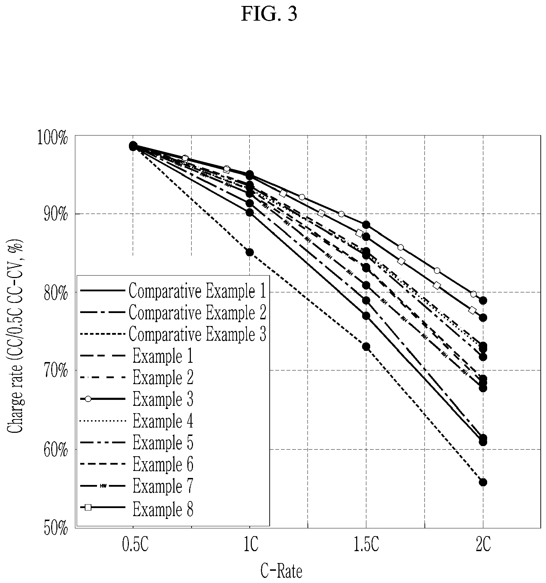

At each rate, charging was performed until a CC-CV upper limit voltage of 4.25 V and a 0.05 C cut-off were reached. When the charge capacity was converted to 100% during 0.5 C constant current-constant voltage charging, a ratio of the constant current (CC) charge capacity at each cycle was measured. The results are shown in FIG. 3. As shown in FIG. 3, the cells of Examples 1 to 8 exhibited improved overvoltage characteristics, demonstrating surprisingly better charging characteristics at high rates, compared to the cells of Comparative Examples 1 to 3.

### Experimental Example 2: Evaluation of rate cycle-life of cells

The cells respectively including the negative electrodes of Examples 3 and 8, and Comparative Example 1 were subjected to charge and discharge of charging at 0.5 C constant current to an upper limit voltage of 4.25 V at 25 °C and discharging at 0.05 C rate cut-off and 0.33 C at 2.8 V under a constant voltage mode for 10 cycles, and then subjected to charge and discharge of charging at 1 C constant current to an upper limit voltage of 4.25 V at 25 °C and discharging at 0.05 C rate cut-off and 0.33 C at 2.8 V under a constant voltage mode for 10 cycles. Thereafter, the charging and discharging of charging at 2 C constant current to an upper limit voltage of 4.25 V at 25 °C and discharging 0.05 C rate cut-off and 0.33 C to 2.8 V under a constant voltage mode were performed for 10 times.

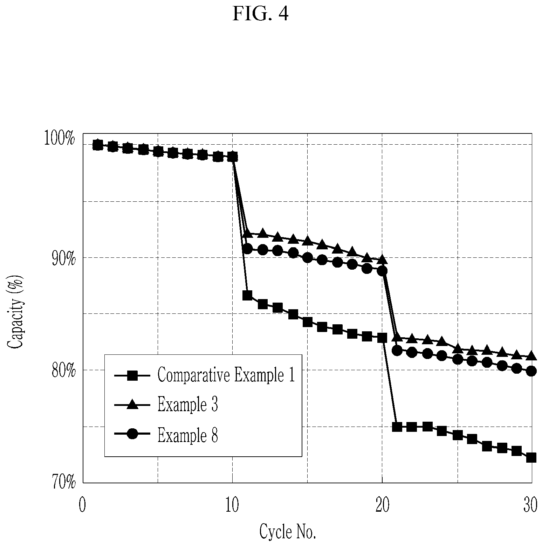

A ratio of charge capacity at each cycle and each C-rate relative to the charge capacity at 0.5 C constant current once were measured. The results are shown in FIG. 4.

As shown in FIG. 4, the cells respectively including the negative electrodes of Examples 3 and 8 exhibited improved cycle-life characteristics during high-rate charging and discharging, compared to Comparative Example 1.

While the subject matter of this disclosure has been described in connection with what is presently considered to be practical example embodiments, it is to be understood that the present disclosure is not limited to the disclosed embodiments, but, on the contrary, is intended to cover various modifications and equivalent arrangements included within the spirit and scope of the appended claims, and equivalents thereof. Therefore, the aforementioned embodiments should be understood to be examples but not limiting the present disclosure in any way.

## Claims

1. A negative electrode (20) for a rechargeable lithium battery (100), comprising:
a current collector (21);
a first negative active material layer (23) on a first side of the current collector (21); and
a second negative active material layer (25) on a second side of the current collector (21),
wherein a loading level (A) of the first negative active material layer (23) is larger than a loading level(B) of the second negative active material layer (25),
the first negative active material layer (23) comprises a 1a layer (23a) contacting the current collector (21) and a 1b layer (23b) on one side of the 1a layer (23a),
the 1a layer (23a) comprises a 1a negative active material,
the 1b layer (23b) comprises a 1b negative active material,
the 1a negative active material comprises natural graphite, or a mixture of natural graphite and artificial graphite,
the 1b negative active material comprises artificial graphite, and
the second negative active material layer (25) is a single layer.

2. The negative electrode (20) for a rechargeable lithium battery (100) as claimed in claim 1, wherein a ratio (A/B) of the loading level (A) of the first negative active material layer (23) relative to the loading level (B) of the second negative active material layer (25) is about 1.2 to about 2.2.

3. The negative electrode (20) for a rechargeable lithium battery (100) as claimed in claim 1 or 2, wherein a ratio (A/B) of the loading level (A) of the first negative active material layer (23) relative to the loading level (B) of the second negative active material layer (25) is about 1.22 to about 2.17.

4. The negative electrode (20) for a rechargeable lithium battery (100) as claimed in any of the claims 1 to 3, wherein the first negative active material layer (23) and the second negative active material layer (25) each comprise pores.

5. The negative electrode (20) for a rechargeable lithium battery (100) as claimed in any of the claims 1 to 4, wherein a ratio (C/D) of a porosity (C) of the first negative active material layer (23) relative to a porosity (D) of the second negative active material layer (25) is about 1 to about 2.

6. The negative electrode (20) for a rechargeable lithium battery (100) as claimed in any of the claims 1 to 5, wherein a ratio (C/D) of a porosity (C) of the first negative active material layer (23) relative to a porosity (D) of the second negative active material layer (25) is about 1 to about 1.6.

7. The negative electrode (20) for a rechargeable lithium battery (100) as claimed in any of the claims 1 to 6, wherein the 1a layer (23a) is a dense layer and the 1b layer (23b) is a porous layer.

8. The negative electrode (20) for a rechargeable lithium battery (100) as claimed in any of the claims 1 to 7, wherein a ratio (F/E) of a porosity (F) of the 1b layer (23b) relative to a porosity (E) of the 1a layer (23a) is about 1 to about 2.

9. The negative electrode (20) for a rechargeable lithium battery (100) as claimed in any of the claims 1 to 8, wherein a ratio (F/E) of a porosity (F) of the 1b layer (23b) relative to a porosity (E) of the 1a layer (23a) is about 1.15 to about 1.72.

10. The negative electrode (20) for a rechargeable lithium battery (100) as claimed in any of the claims 1 to 9, wherein the 1a layer (23a) further comprises a Si-based active material.

11. The negative electrode (20) for a rechargeable lithium battery (100) as claimed in any of the claims 1 to 10, wherein the 1a layer (23a) comprises the Si-based active material at an amount of about 1 wt% to about 7 wt% based on the total 100 wt% of the 1a negative active material and the Si-based active material.

12. A rechargeable lithium battery (100), comprising:
a negative electrode (20) as claimed in any one of claim 1 to claim 11;
a positive electrode (10); and
a non-aqueous electrolyte.
